(19) Europäisches Patentamt
European Patent Office
Office européen des brevets

(11) EP 0 904 321 B1

# (12) FASCICULE DE BREVET EUROPEEN

(45) Date de publication et mention de la délivrance du brevet:
**19.01.2000 Bulletin 2000/03**

(21) Numéro de dépôt: **96922104.3**

(22) Date de dépôt: **12.06.1996**

(51) Int Cl.$^7$: **C08L 83/04**, C08L 101/00

(86) Numéro de dépôt international:
**PCT/FR96/00891**

(87) Numéro de publication internationale:
**WO 97/47687 (18.12.1997 Gazette 1997/54)**

(54) **DISPERSION AQUEUSE A BASE DE SILICONES ET DE LATEX DE (CO)POLYMERE(S) ORGANIQUE(S) POUR LA PREPARATION D'ELASTOMERE SILICONE A TRANSLUCIDITE REGLABLE**

WÄSSRIGE DISPERSIONEN AUF BASIS VON SILIKONEN UND ORGANISCHE KOPOLYMERLATEX ZUR HERSTELLUNG VON SILIKONLASTOMEREN MIT EINSTELLBARER LICHTDURCHLÄSSIGKEIT

SILICON AND ORGANIC (CO)POLYMER LATEX BASED AQUEOUS DISPERSION FOR PREPARING SILICON ELASTOMER WITH ADJUSTABLE TRANSLUCENCY

(84) Etats contractants désignés:
**AT BE DE DK ES FI FR GB IE IT NL**

(43) Date de publication de la demande:
**31.03.1999 Bulletin 1999/13**

(73) Titulaire: **RHODIA CHIMIE**
**92408 Courbevoie Cédex (FR)**

(72) Inventeurs:
- **D'ALLEST, Jean-François**
  **F-92130 Issy-les-Moulineaux (FR)**
- **FEDER, Michel**
  **F-69100 Villeurbanne (FR)**
- **JOANICOT, Mathieu**
  **F-92290 Chatenay Malabry (FR)**
- **MORIN, Alain**
  **Plainsboro NJ 08536 (US)**
- **REEB, Roland**
  **F-77410 Gressy (FR)**

(74) Mandataire: **Trolliet, Maurice et al**
**RHODIA SERVICES**
**Direction de la Propriété Industrielle**
**CRIT-Carrières - BP 62**
**69192 Saint-Fons Cédex (FR)**

(56) Documents cités:
**EP-A- 0 049 026** **EP-A- 0 410 899**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

La présente invention concerne une dispersion aqueuse à base de composés silicones et d'un latex de (co) polymère(s) organique(s), pouvant réticuler en un élastomère à translucidité réglable par élimination de l'eau à l'aide d'un séchage dans les conditions ambiantes. Elle concerne encore son procédé d'obtention et son utilisation dans l'industrie du bâtiment à la réalisation de produits élastomères silicones à translucidité réglable tels que notamment des mastics d'étanchéité et de calfeutrement, des revêtements de protection, des épidermes de façades.

Dans l'état antérieur de la technique, on décrit déjà des dispersions aqueuses à base de silicones pouvant réticuler en un élastomère translucide utilisable à la réalisation de produits pour le bâtiment. Ainsi, dans US-A-4 824 890, la dispersion aqueuse de base est un mélange (i) d'une microémulsion silicone de granulométrie inférieure à 0,15 $\mu$m (150 nm), préparée par polymérisation en émulsion d'un cyclopolydiorganosiloxane, avec (2i) 5 à 30 parties en poids (pour 100 parties du polymère silicone) de silice colloïdale et (3i) 1 à 5 parties en poids (pour 100 parties du polymère silicone) d'un catalyseur de type dicarboxylate de dialkylétain ; dans EP-A-0 542 498, la dispersion aqueuse de base est un mélange (i) d'une émulsion aqueuse d'un polymère silicone réticulé, qui est le produit de réticulation d'une huile silicone à terminaisons silanols par un alkoxysilane en présence d'un catalyseur à base d'étain, ayant moins de 10 % de particules de granulométrie supérieure à 1 $\mu$m (1000 nm) avec (2i) 0,7 à 2 parties en poids (pour 100 parties en poids du polymère silicone réticulé) d'un agent tensioactif particulier consistant dans un alkylsulfate d'un métal alcalin ou d'ammonium, et avec, dans le but de conduire à un produit élastomère doué de propriétés mécaniques la rendant utilisable dans le bâtiment, (3i) 2,5 à 45 parties en poids (pour 100 parties en poids du polymère silicone) de silice colloïdale mise en oeuvre sous forme d'une dispersion aqueuse ayant une taille de particules inférieure à 0,06 $\mu$m (60 nm).

Ces dispersions aqueuses pouvant réticuler en un élastomère translucide présentant toutefois des inconvénients parmi lesquels on peut citer :

- une stabilité au stockage insuffisante ; le système a tendance en effet à donncr naissance à un gel à cause du développement prématuré de réactions de condensation qui peuvent avoir lieu entre le polymère silicone et la silice colloïdale, qui est réactive par ses groupes hydroxyles de surface ;
- un niveau de translucidité qui n'est réglable principalement que par l'ajustement du taux de la charge siliceuse ; or on sait que toute variation du taux de silice est de nature à modifier sensiblement certaines des propriétés essentielles de l'élastomère, en particulier les propriétés mécaniques à la rupture, l'élasticité et l'adhérence ; l'ajustement de la translucidité de l'élastomère ne peut donc se faire sans modifier en même temps d'autres propriétés essentielles.

Selon la présente invention, il a maintenant été trouvé qu'une dispersion aqueuse :

- stable au stockage, car préparée à partir d'ingrédients ne comprenant pas de charge réactive comme une silice colloïdale, et
- capable de réticuler par élimination d'eau en élastomère ayant les avantages d'une part de présenter une translucidité réglable indépendamment de ses autres propriétés, en particulier ses propriétés mécaniques et d'autre part d'offrir, malgré l'absence d'une charge minérale de renforcements, des propriétés mécaniques élevées, rendant avantageusement apte cet élastomère à la réalisation de produits pour le bâtiment,

peut être obtenue en remplaçant les charges minérales habituellement mises en oeuvre dans ce type général de dispersions aqueuses réticulant en un élastomère silicone par élimination d'eau, par une charge polymère se présentant sous la forme d'une dispersion aqueuse de (co)polymère(s) organique(s).

L'expression "translucidité réglable" dans le sens de la présente invention, signifie que le niveau de translucidité peut être aisément ajusté pour couvrir toute la gamme allant de l'opacité totale à une translucidité élevée proche de la transparence.

Les propriétés mécaniques dont il s'agit dans le présent mémoire sont les propriétés indispensables pour que le produit élastomère soit apte à assurer sa fonction de garniture de joints, quelles que soient les conditions climatiques ; on citera en particulier : le module seccant à 100 % d'allongement, l'allongement à la rupture, la résistance à la rupture, l'élasticité et l'adhérence.

L'utilisation d'une association de silicone(s) et d'un latex organique est enseignée déjà dans EP-A-0 410 899 pour augmenter la teneur en extrait sec, tout en conservant une viscosité convenable, de dispersions aqueuses silicones du type de celles dans lesquelles une charge minérale renforçante est présente pour permettre l'obtention, par élimination d'eau. de produits élastomère, par ailleurs opaques, ayant des propriétés mécaniques élevées.

Aucun des documents contenus dans l'état antérieur de la technique n'enseigne l'utilisation, conformément à l'objet de la présente invention, d'une charge polymère pour l'obtention de produits élastomères pour le bâtiment à

translucidité réglable, tout en maintenant de bonnes propriétés mécaniques sans faire appel à la mise en oeuvre d'une charge minérale de renfort.

Plus précisément, la présente invention concerne une dispersion aqueuse à base de silicones et de (co) polymère(s) organique(s) réticulant, par élimination de l'eau à l'aide d'un séchage dans les conditions ambiantes, en un élastomère à translucidité réglable ayant des propriétés mécaniques élevées, caractérisées en ce qu'elle est dépourvue de toute charge minérale de renfort et qu'elle comprend les constituants suivants :

(A) : une émulsion de type huile-dans-eau à base de 100 parties en poids d'une huile ou d'un polymère α,ω-(dihydroxy)polydiorganosiloxane (A1) et de 1 à 100 parties en poids d'un agent de réticulation organosilicique (A2), ladite émulsion :

- . étant stabilisée par au moins un agent tensioactif (A3) choisi parmi les agents tensioactifs anioniques, et non ioniques et leurs mélanges,
- . présentant une taille de particules comprise entre 0,1 μm (100 nm) et 100 μm (100000 nm),
- . ayant une teneur en extrait sec d'au moins 60 % en poids ;

(B) : pour 100 parties en poids d'huile ou polymère (A1), de 1 à 100 parties en poids d'une dispersion aqueuse d'au moins un (co)polymère organique présentant :

- . une taille de particules comprise entre 0,01 μm (10 nm) et 10 μm (10 000 nm) ;
- . un extrait sec compris entre 10 et 70 % en poids ;

(C) : éventuellement, pour 100 parties en poids d'huile ou polymère (A1), de 0,01 à 5 parties en poids d'un composé métallique catalytique de durcissement ;

ladite dispersion aqueuse ayant une teneur en extrait sec d'au moins 60 % en poids ; le réglage de la translucidité du produit élastomère à former se faisant, au niveau de la préparation de la dispersion aqueuse, en ajustant à la (aux) valeur(s) souhaitée(s) : soit la taille des particules de polymère du latex (B) ; soit l'indice de réfraction du polymère constitutif du latex (B) en jouant sur la composition chimique du (co)polymère organique ; soit les deux paramètres précités, taille et indice de réfraction, en même temps.

La dispersion aqueuse finale est préparée par simple mélange intime de tous ses constituants conduisant à une dispersion homogène, stable au stockage à l'abri de l'air.

L'homme de métier sait que le pouvoir diffusant d'une particule [en l'occurrence les particules de polymère du latex (B)] dans un milieu continu [en l'occurence la matrice silicone obtenue après réticulation, par élimination d'eau, de la phase (A)], qui contrôle l'opacité de l'élastomère (inversement proportionnel à sa translucidité), diminue avec :

- la granulométrie de la particule, et
- la différence d'indices de réfraction entre la particule et le milieu continu.

Cet enseignement est conforme à la loi de diffusion de RAYLEIGH qui prévoit que le pouvoir diffusant Pd d'une particule peut s'exprimer par l'équation :

$$Pd = 2.67 \cdot x^4 \cdot \left[\frac{m^2 - 1}{m^2 + 2}\right]^2$$

où x = 2πr / λ avec r = rayon moyen de la particule et λ = longueur d'onde de la lumière, et m = n1 / n2 avec n1 = indice de réfraction de la particule et n2 = indice de réfraction du milieu continu.

<u>L'EMULSION (A)</u> :

<u>Huile ou polymère (A1)</u> :

Les α,ω-(dihydroxy)polydiorganosiloxanes doivent avoir une viscosité d'au moins 100 mPa.s à 25°C de préférence d'au moins 50 000 mPa.s.

C'est en effet pour des viscosités supérieures à 50 000 mPa.s que l'on obtient un élastomère présentant un

ensemble de propriétés mécaniques convenables, en particulier concemant l'allongement et la résistance à la rupture.

En outre plus la viscosité est élevée et plus les propriétés mécaniques se conservent lors du vieillissement de l'élastomère.

Les viscosités préférées pour la présente invention sont comprises entre 50 000 et 1 500 000 mPa.s à 25°C.

La viscosité dont il s'agit ici est la viscosité dynamique à 25°C ; elle est mesurée à l'aide d'un viscosimètre BROOKFIELD selon les indications de la norme AFNOR NTF 76102 de mai 1982.

Les radicaux organiques des $\alpha,\omega$-(dihydroxy)polydiorganosiloxanes sont des radicaux hydrocarbonés monovalents contenant jusqu'à 6 atomes de carbone, éventuellement substitué par des groupes cyano ou fluoro. Les substituants généralement utilisés du fait de leur disponibilité dans les produits industriels sont les radicaux méthyle, éthyle, propyle, phényle, vinyle et 3,3,3-trifluoropropyle. En général au moins 80 % en nombre de ces radicaux sont des radicaux méthyle.

<u>Agent de réticulation (A2)</u> :

Comme indiqué ci-avant, on fait appel à un agent de réticulation de nature organosilicique. On trouvera cidessous la liste des agents de réticulation recommandés avec, pour chacun d'eux, les quantités précises préconisées dans l'émulsion (A) qui tiennent compte de la nature de l'agent de réticulation utilisé, ces quantités étant exprimées en parties en poids pour 100 parties d'huile ou polymère (A1) :

- . 1 à 15 parties d'un organosiliconate ;
- . 1 à 100 parties d'une microémulsion de résine silsesquioxane selon l'enseignement combiné de US-A-3 355 406 et US-A-3 433 780;
- . 5 à 100 parties d'une résine silicone réactive de faible masse moléculaire présentant des groupes alcoxy et acyloxy ;
- . 5 à 100 parties d'une résine silicone de haute masse moléculaire insoluble dans le toluène ;
- . 5 à 100 parties d'une résine silicone hydroxylée présentant par molécule, au moins 2 motifs différents choisis parmi ceux de formules : $R_3SiO_{0,5}$ (M), $R_2SiO$ (D), $RSiO_{1,5}$ (T) et $SiO_2$ (Q), R étant principalement un radical alkyle en $C_1$-$C_6$, vinyle et trifluoro-3,3,3 propyle et une teneur en poids en groupe hydroxyle comprise entre 0,1 et 10 %. Parmi ces résines, introduites telles quelles ou sous la forme d'émulsions aqueuses, on peut citer les résines MQ, MDQ,TD et MTD ;
- . 1 à 20 parties d'un silane de formule : $R_aSiX_{4-a}$ dans laquelle R est un radical organique monovalent, en particulier méthyle ou vinyle, a est 1 ou 0, X est un groupe condensable et/ou hydrolysable choisi de préférence parmi les groupes alcoxy, acyloxy, cétiminoxy, alkylamino, amido et alcényloxy et leurs divers mélanges possibles. Dans le cas où X est un alcoxy, il est souhaitable d'ajouter comme stabilisant de l'amino-2 méthyl-2 propanol, conformément à l'enseignement de EP-A-0 259 734.

L'agent de réticulation (A2) qui est utilisé de préférence consiste dans les 5 à 100 parties de la résine silicone hydroxylée qui vient d'être mentionnée.

<u>Agent tensioactif (A3)</u> :

Dans le cadre de la présente invention, les agents tensioactifs mis en oeuvre englobent des agents tensioactifs anioniques qui peuvent être choisis parmi, par exemple, les alkylbenzène sulfonates, les alkylsulfates, les alkyléthersulfates, les alkylaryléthersulfates, les dioctylsulfosuccinates, de métaux alcalins et leurs mélanges. Les agents tensioactifs anioniques préférés sont les polybenzène sulfonates de métaux alcalins.

Les agents tensioactifs mis en oeuvre peuvent aussi être non-ioniques ; à titre d'exemples, on peut citer les acides gras alcoxylés, les alkylphénols polyalcoxylés, les alcools gras polyalcoxylés, les amides gras polyalcoxylés ou polyglycérolés, les alcools et les alphadiols polyglycérolés, les polymères blocs oxyde d'éthylène-oxyde de propylène, des polydiorganosiloxanes comportant des motifs siloxyles porteurs d'enchaînements oxyde d'éthylène ou d'enchaînements oxyde de propylène ainsi que les alkylglucosides, les alkylpolyglucosides, les sucroéthers, les sucroesters, les sucroglycérides, les esters de sorbitan, les composés éthoxylés de ces dérivés de sucres et des mélanges de ces tensioactifs. Les agents tensioactifs non-ioniques préférés sont les alkylphénols polyalcoxylés et les alcools gras polyalcoxylés.

A titre de modalité préférentielle encore, on peut utiliser un mélange de tensioactif(s) non-ionique(s) préféré(s) avec un (ou plusieurs) tensioactif(s) anionique(s) préféré(s).

Les agents tensioactifs, pris seul ou en mélange, sont choisis en fonction de la nature de l'huile ou polymère silicone (A1) à émulsifier ; un HLB de l'ordre de 11 à 15 est généralement choisi pour émulsifier une huile ou polymère (A1) constitué par un $\alpha,\omega$-(dihydroxy)polydiorganosiloxane.

Préparation de l'émulsion A :

Pour préparer l'émulsion A, on peut utiliser un procédé de polymérisation en émulsion qui permet d'obtenir directement l'émulsion (A). Par ailleurs ce procédé permet de pouvoir obtenir sans difficulté des émulsions (A) comprenant un $\alpha,\omega$-(dihydroxy)-polydiorganosiloxane de très haute viscosité.

Selon ce procédé, la mise en émulsion huile-dans-eau de la phase silicone est réalisée par la technique de la polymérisation anionique d'une huile (A1) de faible viscosité allant de 100 mPa.s à 1000 mPa.s, polymérisation éventuellement conduite en présence de l'agent de réticulation (A2), qui selon un autre mode opératoire peut aussi être ajouté, plus tard, après la polymérisation. Pareil procédé de polymérisation anionique est décrit dans les brevets américains US-A-2 891 920 et surtout US-A-3 294 725 (cités comme référence). Le polymère obtenu est stabilisé anioniquement par un agent tensioactif qui, conformément à l'enseignement de US-A-3 294 725 est de préférence le sel d'un métal alcalin d'un acide hydrocarboné aromatique sulfonique, l'acide libre jouant également le rôle de catalyseur de polymérisation.

Le catalyseur et l'agent tensioactif préférés sont l'acide dodécylbenzènesulfonique et ses sels de métaux alcalins, en particulier son sel de sodium. On peut ajouter éventuellement d'autres agents tensioactifs anioniques ou non-ioniques. Toutefois cet ajout n'est pas nécessaire car, conformément à l'enseignement de US-A-3 294 725, la quantité d'agent tensioactif anionique résultant de la neutralisation de l'acide sulfonique est suffisante pour stabiliser l'émulsion de polymère. Cette quantité est généralement inférieure à 3 %, de préférence 1,5 % du poids de l'émulsion (A).

Conformément à la présente invention, on préfère toutefois partir d'un $\alpha,\omega$-(dihydroxy)polydiorganosiloxane déjà polymérisé, puis le mettre en émulsion aqueuse, en présence de l'agent de réticulation (A2), en stabilisant les émulsions par un agent tensioactif anionique et/ou non-ionique suivant un procédé bien connu de l'homme de métier et décrit en détail dans la littérature (voir par exemple les brevets FR-A-2 064 563, FR-A-2 094 322, FR-A-2 114 230 et EP-A-0 169 098).

Selon ce procédé, on mélange par simple agitation les polymères $\alpha,\omega$-(dihydroxy)-polydiorganosiloxane (A1) avec l'agent de réticulation (A2) et avec l'agent tensioactif (A3) anionique et/ou non-ionique, ce dernier pouvant être en solution aqueuse, à ajouter ensuite si nécessaire de l'eau et à transformer l'ensemble en une émulsion fine et homogène par passage dans un broyeur classique à colloïdes. Eventuellement le broyage ainsi obtenu peut être dilué par une quantité additionnelle d'eau appropriée. On obtient ainsi une émulsion (A) stabilisée par un agent tensioactif anionique ou non-ionique stable au stockage.

L'émulsion (A) préparée par polymérisation en émulsion ou par mise en émulsion du polymère silicone (A1) se présente sous la forme d'une émulsion huile dans l'eau ayant une teneur en extrait sec égale ou supérieure à 60 % en poids et, de préférence, comprise entre 80 et 98 % en poids.

A noter que la mise en émulsion d'un polymère silicone (A1) très visqueux ayant une viscosité supérieure à 30 000 mPa.s peut être avantageusement réalisée en appliquant le procédé décrit dans le document WO-A-94/09058 (cité en référence) qui est caractérisé par une maîtrise très précise de la valeur du rapport des viscosités respectives de la phase aqueuse d'une part et de la phase silicone d'autre part.

On ne sortirait pas du cadre de la présente invention en préparant tout ou partie de l'émulsion (A), par la technique de la polymérisation en émulsion ou par la technique préférée de la mise en émulsion, en réalisant cette polymérisation ou cette mise en émulsion directement en présence du latex (B) au départ de tout ou partie des constituants (A1) et (A2).

DISPERSION DE LATEX (B) :

Latex (B) :

Le latex (B) est formé d'une suspension aqueuse de particules de polymères issue d'un procédé de (co) polymérisation en émulsion de monomère(s) organique(s) polymérisable(s).

Les monomères polymérisables principaux sont constitués par au moins un monomère principal choisi parmi le styrène (a), le butadiène (b), les esters acryliques (c) et les nitriles vinyliques (d). Par esters acryliques on désigne les esters de l'acide acrylique et de l'acide méthacrylique avec les alcanols en $C_1$-$C_{12}$, de préférence $C_1$-$C_8$, tels que l'acrylate de méthyle, l'acrylate d'éthyle, l'acrylate de propyle, l'acrylate de n-butyle, l'acrylate d'isobutyle, l'acrylate de 2-éthylhexyle, le méthacrylate de méthyle, le méthacrylate d'éthyle, le méthacrylate de n-butyle, le méthacrylate d'isobutyle.

Les nitriles vinyliques incluent ceux ayant de 3 à 12 atomes de carbone, en particulier l'acrylonitrile et le méthacrylonitrile.

Le styrène peut être remplacé en totalité ou en partie par l'alpha-méthylstyrène ou le vinyltoluène.

En plus des monomères principaux (a) à (d) précités, il est possible de copolymériser certains de ces monomères principaux avec jusqu'à 40 % en poids du total des monomères, d'au moins un autre monomère ou composé insaturé éthyléniquement choisi parmi :

(e) : les esters vinyliques d'acide carboxylique comme l'acétate de vinyle, le versatate de vinyle, le propionate de vinyle ;
(f) : les acides mono- et di-carboxyliques insaturés éthyléniques comme l'acide acrylique, l'acide méthacrylique, l'acide itaconique, l'acide maléique, l'acide fumarique ;
(g) : les mono-alkylesters des acides dicarboxyliques précités sous (f) avec les alcanols ayant de 1 à 4 atomes de carbone et leur dérivé N-substitués ;
(h) : les amides des acides carboxyliques insaturés comme l'acrylamide, le méthacrylamide, le N-méthalolacrylamide ou -méthacrylamide ;
(i) : les monomères éthyléniques comportant un groupe acide sulfonique et ses sels alcalins ou d'ammonium par exemple l'acide vinylsulfonique, l'acide vinylbenzène sulfonique, l'acide alpha-acrylamido méthylpropane-sulfonique, le 2-sulfoéthylèneméthacrylate ;
(j) : les monomères éthyléniquement insaturés comportant un groupe amino secondaire, tertiaire ou quaternaire ou un groupe hétérocyclique contenant de l'azote par exemple les vinylpyridines, le vinylimidazole, les (méth) acrylates d'aminoalkyle et les (méth)acrylamide d'aminoalkyle comme le diméthylaminoéthylacrylate ou méthacrylate, le ditertiobutylaminoéthylacrylate ou -méthacrylate, le diméthylamino méthylacrylamide ou - méthacrylamide, de même que les monomères zwitterioniques comme l'acrylate de sulfopropyl (diméthyl)aminopropyle;
(k) : les esters des acides (méth)acryliques avec des alcanediols contenant de préférence 2 - 8 atomes de carbone tels que le mono(méth)acrylate de glycol, le mon(méth)acrylate d'hydroxypropyle, le mono(méth)acrylate de 1-4 butanediol ainsi que les monomères comportant deux doubles liaisons polymérisables comme le diméthacrylate d'éthylèneglycol.

En plus des monomères cités (e) à (k), on peut encore mettre en oeuvre, en quantité mineures, comprises entre 0,1 et 5 % en poids du total des monomères, des monomères éthyléniques insaturés ayant un caractère réticulable tels que le (méth)acrylate de glycidyle (1) ou les silanes vinyliques et acryliques (m) tel que le vinyltriméthoxysilane et le vinyltriéthoxysilane.

En plus des monomères précités (e) à (m), on peut encore mettre encore en oeuvre, en quantités allant jusqu'à 40 % en poids du total des monomères ou composés éthyléniquement insaturés, un polyorganosiloxane fonctionnalisé (n) portant au moins une fonction éthyléniquement insaturée (par exemple une fonction vinylique ou (méth) acrylique), susceptible de réagir par voie radicalaire avec au moins un des monomères éthyléniquement insaturés (a) à (d) plus éventuellement au moins un des monomères (e) à (m), et éventuellement au moins une autre fonction réactive (par exemple un groupe époxyfonctionnel ou hydroxyfonctionnel) (cf. notamment EP-A-0.635.526).

Comme dispersion (B) utilisable dans le cadre de la présente invention, on citera en particulier celles contenant les homopolymères dérivés des monomères (a), (c) et (e).

Comme latex (B) copolymères, on citera en particulier les latex contenant les copolymères dérivés :

- au moins d'un monomère (a), au moins d'un monomère (d) et au moins un monomère (f) ;
- au moins d'un monomère (a) et au moins d'un monomère (c) ;
- au moins de deux monomères (c) de nature différente ;
- au moins d'un monomère (c) et au moins d'un monomère (f) ;
- au moins d'un monomère (c), au moins d'un monomère (e) et au moins un monomère (g) ;
- au moins d'un monomère (c) et au moins d'un monomère (e) ;
- au moins d'un monomère (c) et au moins d'un monomère (m).

En conformité avec la loi de diffusion de RAYLEIGH dont on a parlé ci-avant, on constate, pour une matrice silicone donnée, que la translucidité d'un élastomère renfermant une charge polymère, en l'occurrence les particules de polymère du latex (B), ayant une granulométrie par exemple comprise entre 0,01 µm (10 nm) et 0,06 µm (60 nm) est toujours supérieure à celle d'un élastomère renfermant la même charge polymère mais ayant cette fois une taille de particules sensiblement plus importante, c'est-à-dire supérieure à 0,06 µm (60 nm). On constate encore que pour une taille donnée (faible ou importante) des particules de la charge polymère, la translucidité est toujours fortement améliorée par la diminution de l'indice de réfraction du polymère de la charge, c'est-à-dire en modifiant de manière adéquate la composition chimique dudit polymère.

Conformément à une modalité préférentielle de mise en oeuvre de l'invention, aboutissant à un élastomère à translucidité réglable dans une zone de valeurs moyennes à élevées, on utilise un latex (B) présentant :

- une taille de particules comprise entre 0,01 µm (10 nm) et 0,08 µm (80 nm), et de préférence comprise entre 0,02

µm (20 nm) et 0,06 µm (60 nm), et

- un extrait sec compris entre 10 et 50 % en poids.

Conformément à une modalité plus préférentielle, aboutissant à l'objectif de translucidité visé ci-avant, on utilise un latex (B), ayant la faible granulométrie et l'extrait sec indiqués ci-avant, qui contient les (co)polymères acryliques suivants :

- les homopolymères acryliques obtenus à partir d'un monomère (c), et
- les copolymères, obtenus en totalité ou en partie, soit à partir de monomères acryliques (c), soit à partir d'au moins un monomère (c) et d'au moins un autre monomère acrylique pris dans le groupe formé par les monomères (f) pris en tant que acides (méth)acryliques, les monomères (h) pris en tant que dérivés acryliques, et les monomères (k).

Dans le cas de copolymères dérivant en partie de monomères acryliques (c) ou (c) + (f) et/ou (h) et/ou (k), on utilise une quantité de monomères acryliques comprise entre 70 % et 99 % en poids du total des monomères et, de manière préférentielle, entre 80 % et 99 % en poids du total des monomères.

Bien entendu, les propriétés mécaniques des latex (B) dépendant dans une grande mesure des monomères choisis pour leur préparation. Les polymères constitutifs des latex (B) peuvent avoir une température de transition vitreuse Tg comprise entre - 70°C et + 230°C.

Conformément à une modalité encore plus préférentielle de mise en oeuvre de l'invention, les dispersions aqueuses (B) qui sont utilisées sont les latex définis ci-avant dans le cadre de la modalité dite "plus préférentielle", dont les polymères acryliques constitutifs ont une température de transition vitreuse Tg comprise entre + 50°C et + 130°C. Le choix de ces valeurs de Tg permet d'obtenir le maximum d'efficacité de renfort (meilleurs valeurs des propriétés en rupture).

Les polymères constitutifs des latex (B) présentent un indice de réfraction $\bar{n}$ compris généralement entre 1,34 et 1,60. L'indice en question est calculé par la relation simplifiée de GLADSTONE-DALE :

$$\bar{n} = \sum_{i} x_i \bar{n}_i$$

où xi et $\bar{n}_i$ représentent la fraction volumique et l'indice de réfraction de chaque constituant du polymère (cf. l'ouvrage Polymer Handbook, 1989, pages VI / 452 à VI / 461).

Conformément à une modalité tout spécialement préférentielle de mise en oeuvre de la présente invention, les dispersions aqueuses (B) qui sont utilisées sont les latex définis ci-avant dans le cadre de la modalité dite "encore plus préférentielle" pour lesquels l'indice $\bar{n}$ des polymères est compris entre 1,34 et 1,50.

Conformément à une modalité différente de mise en oeuvre de l'invention, aboutissant à un élastomère à translucidité réglable dans une zone de valeurs sensiblement inférieures à celles de la zone de valeurs moyennes à élevées dont on a parlé ci-avant à propos des modalités préférentielles de mise en oeuvre de l'invention, on utilise un latex (B) :

- présentant une taille de particules comprise entre une valeur juste supérieure à 0,08 µm (80 nm) et 10 µm, et de préférence comprise entre une valeur juste supérieure à 0,08 µm (80 nm) et 2 µm ; et un extrait sec compris entre 30 % et 70 % en poids ;
- et contenant les (co)polymères acryliques définis ci-avant dans le cadre de la modalité dite "plus préférentielle".

Conformément à une modalité différente et préférentielle de mise en oeuvre de l'invention, les dispersions aqueuses (B) qui sont utilisées sont les latex définis ci-avant dans le cadre de la modalité dite "différente" dont les polymères acryliques constitutifs ont une température de transition vitreuse Tg comprise entre + 50°C et + 130°C.

Conformément à une modalité différente et plus préférentielle, les dispersions aqueuses (B) qui sont utilisées sont les latex définis ci-avant dans le cadre de la modalité dite "différente et préférentielle" pour lesquels l'indice $\bar{n}$ des polymères est compris entre 1,34 et 1,50.

<u>Préparation du latex (B)</u> :

L'homme de métier sait préparer les latex (B). Il existe plusieurs façons de préparer des dispersions aqueuses de polymères organiques ; les dispersions peuvent être obtenues :

- par polymérisation radicalaire en émulsion ;
- par polymérisation d'une microémulsion directe du (ou des) monomères correspondants ;
- par émulsification et évaporation de solvant : ce procédé consiste à mettre le polymère en solution dans un solvant non miscible à l'eau et ayant une température d'ébullition inférieure à celle de l'eau, puis à émulsionner dans l'eau la solution de polymère, puis à éliminer le solvant par évaporation ;
- par précipitation dans un non solvant : ce procédé consiste à mettre le polymère en solution dans un solvant miscible avec l'eau, puis à précipiter le polymère dans l'eau ;
- par coacervation : ce procédé consiste, en partant d'une solution homogène, à obtenir une démixion de phase avec formation d'une phase colloïdale (riche en polymère) en jouant sur des facteurs physiques comme le pH ou la température.

Le procédé qui est utilisé de préférence pour la préparation des latex (B) entrant dans le cadre de la présente invention est le procédé par polymérisation radicalaire en émulsion.

En ce qui concerne les latex (B) de faible granulométrie comprise entre 0,01 µm (10 nm) et 0,08 µm (80 nm) qui sont utilisés dans le cadre des modalités préférentielles de mise en oeuvre de l'invention, ils sont préparés par un procédé par polymérisation radicalaire plus préféré, décrit dans EP-A-0 644 205 (cité comme référence), qui prévoit l'introduction incrémentielle de monomère(s) dans un milieu réactionnel aqueux avec introduction, éventuellement incrémentielle aussi, d'initiateur(s) de radicaux libres.

LE COMPOSE METALLIOUE DE DURCISSEMENT (C) :

Le composé (C), en particulier pour certains agents de réticulation (A2) tel que le siliconate, est facultatif, mais dans le cadre de la présente invention, il est recommandé d'utiliser (C).

Les composés catalytiques métalliques de durcissement (C) sont essentiellement les sels d'acides carboxyliques et les halogénures de métaux choisis parmi le plomb, le zinc, le zirconium, le titane, le fer, l'étain, le baryum, le calcium et le manganèse.

Le constituant (C) est de préférence un composé catalytique à l'étain, généralement un sel d'organoétain. introduit de préférence sous forme d'une émulsion aqueuse. Les sels d'organoétain utilisables sont décrits, en particulier dans l'ouvrage de NOLL, Chemistry and Technology of Silicones Academic Press (1968), page 337. Pareille émulsion peut être stabilisée au besoin, par exemple, par de l'alcool polyvinylique.

On peut également utiliser le produit de réaction d'un silicate d'alkyle ou d'un aryltrialcoxysilane sur le diacétate de dibutylétain comme décrit dans le brevet belge BE-A-842 305.

Les sels d'étain préférés sont les bischélates d'étain (EP-A-0 147 323 et EP-A-0 235 049), les dicarboxylates de diorganoétain et en particulier les diversatates de dibutyl- ou de dioctylétain (brevet britannique GB-A-1 289 900), le diacétate de dibutyl- ou de dioctylétain, le dilaurate de dibutyl- ou dioctylétain. On utilise de 0,01 à 3, de préférence de 0,05 à 2 parties de composé métallique de durcissement (C) pour 100 parties de (A1).

AUTRES ADDITIFS FACULTATIFS :

Les dispersions aqueuses selon l'invention peuvent comporter en outre un ou plusieurs additif(s) tels que notamment :

(D) : éventuellement pour 100 parties en poids d'huile ou polymère (A1), de 0,1 à 20 parties en poids d'un agent d'adhérence ;
(E) : éventuellement pour 100 parties en poids d'huile ou polymère (A1), de 0,1 à 5 parties en poids d'un agent tensioactif organosilicique non ionique, anionique ou cationique ;
(F) : éventuellement une quantité efficace d'au moins un composé pris dans le groupe formé par des antifongiques, des antimousses, des antigels tels que l'éthylène glycol et le propylène glycol et des agents thixotropants tels que la carboxyméthylcellulose et la gomme xanthane.

De préférence l'agent d'adhérence (D) est choisi parmi les composés organosiliciques portant à la fois (1) des groupes organiques substitués par des radicaux choisis dans le groupe des radicaux amino, uréido, isocyanato, époxy, alkényle, isocyanurates, hydantoyle, mercaptoester et (2) des groupes hydrolysables liés aux atomes de silicium.

A titre illustratif peuvent être cités les composés organosiliciques (D) répondant aux formules ci-après (accompagnées des numéros des brevets les décrivants) :

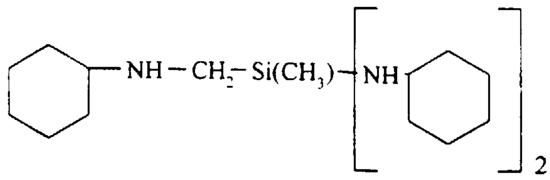

EP-A-0 074 001

$H_2N\text{-}CH_2\text{-}CH_2\text{-}HN—CH_2—CH(CH_3)\text{-}COO(CH_2)_3—Si(OCH_3)_3$

**DE-A-3 304 182**

$[(CH_3)_3CO]_2—Si(OCOCH_3)_2$

US-A-4 356 116

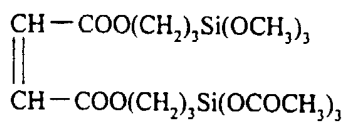

US-A-4 273 698

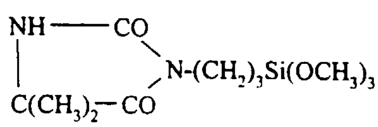

EP-A-0 031 996

$(C_2H_5O)_3Si(CH_2)_3NHCO\text{-}CH{=}CH—COOH$

**US-A-4 466 739**

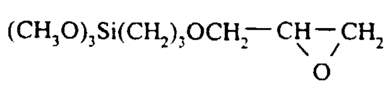

US-A-4 115 356

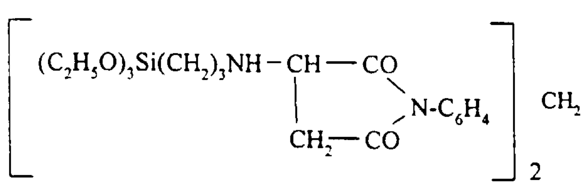

FR-A-2 259 833

De préférence, l'agent tensioactif organosilicique (E) est choisi parmi des polyorganosiloxanes fonctionnalisés soit par des enchaînements oxyde d'éthylène ou oxyde de propylène (un agent de ce type est disponible dans le commerce sous la marque TEGOPREN, type 30. 58 ou 70, de la Société GOLDSCHMIDT), soit par des groupes amino salifiés (un agent de ce type est également disponible dans le commerce sous la marque TEGOPREN. type 69. de la Société GOLDSCHMIDT), soit par des groupes sulfonates métalliques (cf. à ce propos l'ouvrage : Surface Phenomena and Additives in Water - Based Coatings and Printing Technology, édité par M.K. SHARMA, Plenum Press. New-York, 1991, pages 73 à 82, qui décrit ce type d'agents).

<u>PREPARATION DE LA DISPERSION AQUEUSE DE L'INVENTION</u>

Pour préparer les dispersions aqueuses selon l'invention, il est recommandé d'ajouter sous agitation à température ambiante à l'émulsion (A), en premier lieu la dispersion (B), puis le catalyseur métallique de durcissement (C) éventuellement sous la forme d'une dispersion ou d'une émulsion aqueuse et éventuellement le (ou les) additif(s) (D), (E) et/ou (F). Rappelons qu'il est possible d'effectuer en tout ou partie la polymérisation en émulsion ou la mise en émulsion de l'émulsion (A) en présence de la dispersion (B).
Le pH de la dispersion aqueuse peut être acide, neutre ou basique. Il est toutefois recommandé de régler le pH de la dispersion à une valeur supérieure à 7, de préférence comprise entre 8 et 13 au moyen d'une base organique forte ou de préférence une base minérale forte (triéthanolamine, et de préférence soude et potasse).
La dispersion finale obtenu est homogénéisée puis dégazée et est ensuite conditionnée en emballage étanche à l'oxygène de l'air et à la vapeur d'eau.
Les constituants (A), (B), (C) et éventuellement (D), (E) et/ou (F) sont mélangés en des quantités telles que l'émulsion finale présente une teneur en extrait sec au moins égale à 60 %, de préférence comprise entre 80 et 95 % en poids.
Pour déterminer la teneur en extrait sec on place 2 g de dispersion dans une coupelle de pesage en aluminium et on la chauffe 3 heures à 50°C dans un four à circulation d'air sec. Après refroidissement on pèse à nouveau la coupelle et on détermine le pourcentage de matière restante sur les 2 g initiaux qui représente la teneur en extrait sec.
Selon une variante préférée, la dispersion selon l'invention après sa préparation subit une étape de maturation, à température ambiante, de quelques heures à quelques jours.
Cette étape de maturation consiste simplement à laisser reposer la dispersion à l'abri de l'oxygène de l'air avant son utilisation.
Les dispersions selon l'invention peuvent être utilisées dans l'industrie du bâtiment pour la réalisation de produits élastomères silicones translucides, en particulier des mastics d'étanchéité et de calfeutrement et des revêtements hydrofuges de surfaces de bâtiments ou épidermes de façades en contact avec les intempéries, à la dose par exemple de 20 à 100 g de dispersion par $m^2$ de surface à traiter.
Les exemples suivants illustrent l'invention sans en limiter la portée.

<u>EXEMPLE 1 (pour comparaison)</u> :

On prépare une émulsion (A) en introduisant dans un malaxeur à bras MEILI de 5 litres :

- 1000 g d'une huile $\alpha,\omega$-(dihydroxy)polydiméthylsiloxane de viscosité 80 000 mPa.s à 25°C ;
- 60 g d'une résine silicone hydroxylée introduite telle quelle, ayant 0,5 % en poids de groupe hydroxyle, constituée 62 % en poids de motifs $CH_3SiO_{1,5}$ et 24 % en poids de motifs $(CH_3)_2SiO$ et 14 % en poids de motifs $(CH_3)_3SiO_{0,5}$ ; cette résine est soluble dans le toluène et présente une masse moléculaire d'environ 1000 et un rapport molaire $CH_3/Si$ de 1,5 ;
- 45 g de GENAPOL X080, commercialisé par la société HOECHST, qui est un tensioactif non ionique à savoir un alcool gras (à 13 atomes de carbone) polyalcoxylé (à environ 8 motifs d'oxyde d'éthylène) ; et
- 35 g d'eau.

On homogénéise le mélange final obtenu pendant 180 minutes.
L'émulsion A ainsi obtenue présente une taille moyenne de particules de 0,5 μm (500 nm) et un extrait sec de 96,9 % en poids.
Dans le même mélangeur, on incorpore à l'émulsion (A), sous agitation pendant 10 minutes pour chaque additif:

- une dispersion aqueuse de $CaCO_3$ de précipitation à 43,6 % en poids d'extrait sec, constituée de : 280 g de $CaCO_3$ de précipitation, de granulométrie moyenne de 0,07 μm (70 nm), soit un volume équivalent à celui des particules de la charge polymères des exemples suivants, 13 g de dispersant sous forme d'une solution aqueuse contenant

40 % en poids de polyacrylate de sodium et 323 g d'eau ;

- 10 g d'émulsion aqueuse à 38 % en poids de dilaurate de di-n-octylétain, stabilisée par 5 % en poids d'alcool polyvinylique par rapport au sel d'étain ; et
- 22 g d'une solution aqueuse de potasse à 50 % en poids d'extrait sec.

La dispersion finale a un pH de 12 et une teneur en extrait sec de 81,3 % en poids.
Après 4 jours de stockage, on prépare des échantillons qui serviront à mesurer les différentes propriétés recherchées mentionnées ci-après :

Propriétés mécaniques en rupture et élasticité :

On étend à la racle sur une plaque de Téflon la dispersion pour faire des films de 2,5 mm d'épaisseur qu'on laisse sécher pendant 7 jours dans une pièces climatisée (température 23°C ± 2°C ; humidité relative : 55 % ± 5 %).
Sur des éprouvettes H2 découpées dans le film séché on mesure les propriétés suivantes :

- l'allongement à la rupture (AR, en %) et la résistance à la rupture (RR, en MPa) selon les indications de la norme AFNOR-T-46002,
- l'élasticité (E, en %) du mastic par un test de relaxation dans les conditions suivantes : allongement de 100 % de l'échantillon à une vitesse de 300 mm / min, puis relaxation de l'échantillon allongé pendant 15 minutes. L'élasticité en % est évaluée par la formule $100(1-C_{15}/C_0)$ où $C_0$ et $C_{15}$ sont les contraintes subies par l'échantillon à l'arrêt de l'allongement ($C_0$) et 15 minutes après ($C_{15}$). L'élasticité est évaluée sur la moyenne de 3 éprouvettes.

Translucidité :

Une coupelle en verre à fond plat de 4 mm de profondeur est remplie avec la dispersion, puis l'ensemble est séché pendant 10 jours en salle climatisée (température : 23°C ± 2°C; humidité relative : 55 % ± 5 %).
La translucidité de l'échantillon est déterminée par son rapport de contraste (RC, en %) sur fonds noir et blanc. Ce rapport est mesuré avec l'appareil DATACOLOR, commercialisé par la Société du même nom, dans les conditions d'éclairage suivant : éclairage diffus, luminance $C_{10}$ avec filtres anti-UV et anti-brillant. La translucidité est évaluée par le rapport de contraste RC = Y fond noir / Y fond blanc x 100 (%). c'est-à-dire que RC/100 est le rapport des Y (lumière verte) des coordonnées trichromiques de la lumière réfléchie à 90°C par l'échantillon d'élastomère, posé sur des fonds respectivement noir et blanc.

Adhérence :

L'adhérence (A, en Newton) de l'élastomère est estimée par un test de pelage en T, à 180° d'angle, sur un support en verre claire, à la vitesse de 50 mm / min, d'un film de mastic de 25 mm de large, après 7 jours de séchage à 23°C ± 2°C et 55 % ± 5 % d'humidité relative.
Le film de mastic est renforcé par un tissu de polyamide à large maille de type nylon 66 de la façon suivante : on dépose un premier film de 1,5 mm d'épaisseur sur lequel est déroulé la bande polyamide ; une seconde couche de dispersion aqueuse silicone est déposée sur l'ensemble à l'aide d'un racle de 2,5 mm, ce qui conduit à une structure sandwich mastic-polyamide-mastic.
Toutes les propriétés mesurées sont rassemblées dans le tableau II ci-après.

EXEMPLE 2 à 7 (selon l'invention) :

On opère comme indiqué ci-avant à l'exemple 1, sauf que maintenant la dispersion aqueuse de $CaCO_3$ est remplacée par 330 g d'un latex (B) de fine granulométrie.

Caractéristiques du nanolatex mis en oeuvre :

TABLEAU I

| Exemple | Composition (% en poids) | | | | | Extrait Sec | Taille moyenne | Tg (°C) | $\bar{n}$ |
|---|---|---|---|---|---|---|---|---|---|
| | MAM | STY | ABu | MAA | VTEO | (% en poids) | nm | (2) | (3) |
| 2 | 90 | 0 | 0 | 10 | 0 | 30 | 40 | 114 | 1,493 |
| 3 | 35 | 0 | 55 | 10 | 0 | 30 | 40 | 1 | 1,480 |
| 4 | 0 | 0 | 90 | 10 | 0 | 30 | 40 | - 42 | 1,472 |
| 5 | 100 | 0 | 0 | 0 | 0 | 30 | 40 | 105 | 1,489 |
| 6 | 95 | 0 | 0 | 0 | 5 | 30 | 40 | 105 | 1,489 |

(1) MAM = méthacrylate de méthyle ; STY = styrène ; ABu = acrylate de butyle ; MAA = acide méthacrylique ; VTEO = vinyltriéthoxysilane.
(2) Tg est mesurée par analyse calorimétrique différentielle (Differential Scanning Calorimetry on DSC), selon les indications de la norme AFNOR T 51-5077.
(3) Indice de réfraction $\bar{n}$ du (co)polymère : il est calculé à partir des indices des homopolymères selon la règle d'additivation de GLADSTONE-DALE : $\bar{n}$ polystyrène = 1,591, $\bar{n}$ polyacide acrylique = 1,527, $\bar{n}$ polyméthacrylate de méthyle = 1,485, $\bar{n}$ polyacrylate de butyle = 1,4666.

Mode opératoire général de préparation des nanolatex :

Dans un réacteur de 1 litre en acier inoxydable, muni d'une agitation et d'une double enveloppe à circulation d'eau permettant de réguler la température de l'intérieur du réacteur, on introduit successivement 3 g de laurylsulfate de sodium, 240,3 g d'eau et 0,5 g d'une solution aqueuse à 30 % en poids de persulfate d'ammonium. La température du contenu du réacteur est ensuite portée à 90°C et on introduit ensuite en continu, sur une période de 2 heures, 100 g du mélange des monomères éthyléniquement insaturés. La dispersion est ensuite refroidie et filtrée.
On obtient un latex gris bleu présentant une teneur en extrait sec de 30 % en poids et une taille moyenne de particules de 0,04 µm (40 nm).
Les dispersions finales, des exemples 2 à 7, obtenues ont un pH de 12 et une teneur en extrait sec de 81,3 %.
Les propriétés des élastomères renforcés avec les nanolatex, ainsi que celles de l'élastomère de référence au carbonate sont rassemblées dans le tableau II suivant :

TABLEAU II

| | RC (%) | AR (%) | RR (MPa) | E (%) | A (N) |
|---|---|---|---|---|---|
| Exemple 1 (pour comparaison) | 100 | 935 | 0,75 | 26,5 | 0.1 |
| Exemple 2 | 93,0 | 930 | 0,89 | 29,2 | 0,5 |
| Exemple 3 | 88,6 | 675 | 0,50 | 21,3 | 0,1 |
| Exemple 4 | 76,3 | 640 | 0,33 | 26,8 | 0,1 |
| Exemple 5 | 87,9 | 935 | 0,51 | 30,6 | 10 |
| Exemple 6 | 90,0 | 730 | 0,77 | 42,9 | 15 |

Par comparaison avec un élastomère renforcé au carbonate, les élastomères renforcés avec les nanolatex ont des propriétés mécaniques comparables sinon meilleures, et sont nettement plus translucides.

## Revendications

**1.** Dispersion aqueuse à base de silicones et de (co)polymère(s) organique(s) réticulant, par élimination de l'eau à l'aide d'un séchage dans les conditions ambiantes, en un élastomère à translucidité réglable ayant des propriétés mécaniques élevées, caractérisées en ce qu'elle est dépourvue de toute charge minérale de renfort et qu'elle comprend les constituants suivants :

(A): une émulsion de type huile-dans-eau à base de 100 parties en poids d'une huile ou d'un polymère $\alpha,\omega$-(dihydroxy)polydiorganosiloxane (A1) et de 1 à 100 parties en poids d'un agent de réticulation organosilicique (A2), ladite émulsion :

. étant stabilisée par au moins un agent tensioactif (A3) choisi parmi les agents tensioactifs anioniques, et non ioniques et leurs mélanges,
. présentant une taille de particules comprise entre 0,1 µm (100 nm) et 100 µm (100000 nm),
. ayant une teneur en extrait sec d'au moins 60 % en poids ;

(B) : pour 100 parties en poids d'huile ou polymère (A1), de 1 à 100 parties en poids d'une dispersion aqueuse d'au moins un (co)polymère organique présentant :

. une taille de particules comprise entre 0,01 µm (10 nm) et 10 µm (10 000 nm),
. un extrait sec compris entre 10 et 70 % en poids ;

(C) : éventuellement, pour 100 parties en poids d'huile ou polymère (A1), de 0,01 à 5 parties en poids d'un composé métallique catalytique de durcissement ;

ladite dispersion aqueuse ayant et une teneur en extrait sec d'au moins 60 % en poids ; le réglage de la translucidité du produit élastomère à former se faisant, au niveau de la préparation de la dispersion aqueuse, en ajustant à la (aux) valeur(s) souhaitée(s) : soit la taille des particules de polymère du latex (B) ; soit l'indice de réfraction du polymère constitutif du latex (B) en jouant sur la composition chimique du (co)polymère organique ; soit les deux paramètres précités, taille et indice de réfraction, en même temps.

**2.** Dispersion selon la revendication 1, caractérisée en ce que les $\alpha,\omega$-(dihydroxy)-polydiorganosiloxanes (A1) doivent avoir une viscosité d'au moins 50 000 mPa.S à 25°C et que les radicaux organiques de ces siloxanes sont des radicaux hydrocarbonés monovalents contenant jusqu'à 6 atomes de carbone, éventuellement substitué par des groupes cyano ou fluoro.

**3.** Dispersion selon la revendication 1 ou 2, caractérisé en ce que l'agent de réticulation (A2) est choisi parmi :

- un organosiliconate,
- une résine microémulsion de résine silsesquinoxane,
- une résine silicone réactive de faible masse moléculaire présentant des groupes alcoxy et acyloxy ;
- une résine silicone de haute masse moléculaire insoluble dans le toluène ;
- une résine silicone hydroxylée présentant par molécule, au moins 2 motifs différents choisis parmi ceux de formules : $R_3SiO_{0,5}$ (M), $R_2SiO$ (D), $RSiO_{1,5}$ (T) et $SiO_2$ (Q), R étant principalement un radical alkyle en $C_1$ - $C_6$, vinyle et trifluoro-3,3,3 propyle et une teneur en poids en groupe hydroxyle comprise entre 0,1 et 10 % ;
- un silane de formule : $R_aSiX_{4-a}$ dans laquelle R est un radical organique monovalent, en particulier méthyle ou vinyle, a est 1 ou 0, X est un groupe condensable et/ou hydrolysable choisi de préférence parmi les groupes alcoxy, acyloxy, cétiminoxy, alkylamino, amido et alcényloxy et leurs divers mélanges possibles.

**4.** Dispersion selon l'une quelconque des revendications 1 à 3, caractérisée en ce que la dispersion aqueuse (B) est celle contenant des (co)polymères organiques qui sont issus :

- de la (co)polymérisation d'au moins un monomère principal choisi parmi le styrène (a), le butadiène (b), les esters acryliques (c) et les nitriles vinyliques (d),
- certains de ces monomères principaux (a) à (d) pouvant être copolymériser avec jusqu'à 40 % en poids du total des monomères, d'au moins un autre monomère ou composé insaturé choisi dans le groupe formé par :

(e) : les esters vinyliques d'acide carboxylique ;

(f) : les acides mono- et di-carboxyliques insaturés éthyléniques ;
(g) : les mono-alkylesters des acides dicarboxyliques précités sous (f) avec les alcanols ayant de 1 à 4 atomes de carbone et leur dérivé N-substitués ;
(h) : les amides des acides carboxyliques insaturés ;
(i) : les monomères éthyléniques comportant un groupe acide sulfonique et ses sels alcalins ou d'ammonium ;
(j) : les monomères éthyléniquement insaturés comportant un groupe amino secondaire, tertiaire ou quaternaire ou un groupe hétérocyclique contenant de l'azote, de même que les monomères zwitterioniques ;
(k) : les esters des acides (méth)acryliques avec des alcanediols contenant de préférence 2 - 8 atomes de carbone ainsi que les monomères comportant deux doubles liaisons polymérisables ;
(l) : le méthacrylate de glycidyle ;
(m) : les silanes vinyliques ou acryliques ;
(n) : un polyorganosiloxane fonctionnalisé portant au moins une fonction éthyléniquement insaturée susceptible de réagir par voie radicalaire avec un autre monomère éthyléniquement insaturé.

**5.** Dispersion selon l'une quelconque des revendications 1 à 4, caractérisée en ce que, dans le but de produire un élastomère à translucidité réglable dans une zone de valeurs moyennes à élevées, on utilise un latex (B) présentant :

- une taille de particules comprise entre 0,01 µm (10 nm) et 0,08 µm (80 nm), et
- un extrait sec compris entre 10 et 50 % en poids.

**6.** Dispersion selon la revendication 5, caractérisée en ce que :

• la dispersion aqueuse ou latex (B) est celui contenant :

  - les homopolymères acryliques obtenus à partir d'un monomère (c), et
  - les copolymères, obtenus en totalité ou en partie, soit à partir de monomères acryliques (c), soit à partir d'au moins un monomère (c) et d'au moins un autre monomère acrylique pris dans le groupe formé par les monomères (f) pris en tant que acides (méth)acryliques, les monomères (h) pris en tant que dérivés acryliques, et les monomères (k) ; et

• dans le cas de copolymères dérivant en partie de monomères acryliques (c) ou (c) + (f) et/ou (h) et/ou (k), on utilise une quantité de monomères acryliques comprise entre 70 % et 99 % en poids du total des monomères.

**7.** Dispersion selon la revendication 6, caractérisée en ce que la dispersion aqueuse (B) est celle contenant des (co) polymères organiques acryliques ayant une température de transition vitreuse Tg comprise entre + 50°C et + 130°C.

**8.** Dispersion selon la revendication 7, caractérisée en ce que la dispersion aqueuse (B) est celle contenant des (co) polymères organiques acryliques ayant une Tg comprise entre + 50°C et + 130°C, pour lesquels l'indice de réfraction $\bar{n}$ est compris entre 1,34 et 1,50.

**9.** Dispersion aqueuse selon l'une quelconque des revendications 1 à 3, caractérisée en ce que , dans le but de produire un élastomère à translucidité réglable dans une zone de valeurs inférieures à celles de la zone de valeurs moyennes à élevées dont on a parlé ci-avant dans la revendication 5, on utilise un latex (B) :

- présentant une taille de particules comprise entre une valeur juste supérieure à 0,08 µm (80 nm) et 10 µm ; et un extrait sec compris entre 30 % et 70 % en poids ; et
- contenant les (co)polymères acryliques définis ci-avant dans la revendication 6.

**10.** Dispersion aqueuse selon la revendication 9, caractérisée en ce que la dispersion aqueuse (B) est celle contenant des (co)polymères organiques acryliques ayant une température de transition vitreuse Tg comprise entre + 50°C et + 130°C.

**11.** Dispersion aqueuse selon la revendication 10, caractérisée en ce que la dispersion aqueuse (B) est celle contenant des (co)polymères organiques acryliques ayant une Tg comprise entre + 50°C et + 130°C, pour lesquels l'indice de réfraction $\bar{n}$ est compris entre 1,34 et 1,50.

**12.** Dispersion aqueuse selon l'une quelconque des revendications 5 à 8, caractérisée en ce que le latex B présente une taille de particules comprise entre 0,02 µm (20 nm) et 0,06 µm (60 nm).

**13.** Dispersion aqueuse selon l'une quelconque des revendications 9 à 11, caractérisée en ce que le latex B présente une taille de particules comprise entre une valeur juste supérieure à 0,08 µm (80 nm) et 2 µm.

**14.** Dispersion aqueuse selon l'une quelconque des revendications 1 à 13, caractérisée en ce que :

- l'émulsion (A) a une teneur en extrait sec de 80 à 98 % en poids ;
- la dispersion aqueuse finale a une teneur en extrait sec de 80 à 95 % en poids.

**15.** Dispersion aqueuse selon l'une quelconque des revendications 1 à 14, caractérisée en ce que le composé métallique (C) est un sel d'organoétain se trouvant sous forme d'une émulsion aqueuse.

**16.** Procédé de préparation d'une dispersion aqueuse telle que définie dans les revendications 1 à 15, caractérisé en ce que l'on ajoute à température ambiante à l'émulsion (A), en premier lieu la dispersion (B), puis le catalyseur métallique de durcissement (C) éventuellement sous la forme d'une dispersion ou d'une émulsion aqueuse et éventuellement le (ou les) additif(s) facultatif(s).

**17.** Procédé selon la revendication 16, caractérisé en ce que le pH de la dispersion aqueuse finale est réglé à une valeur supérieure à 7 par ajout d'une base minérale forte.

**18.** Utilisation d'une dispersion aqueuse telle que définie à l'une quelconque des revendications 1 à 16, dans l'industrie du bâtiment à la réalisation de produits élastomères silicones translucides consistant en des mastics d'étanchéité et de calfeutrement, des revêtements de protection, et des épidermes de façades.

**Patentansprüche**

**1.** Wäßrige Dispersion auf der Basis von Siliconen und organischem(n) (Co)polymer(en), die durch Entfernung von Wasser mit Hilfe regulierbarer Lichtdurchlässigkeit vernetzen und erhöhte mechanischen Eigenschaften besitzen, dadurch gekennzeichnet, daß sie frei von jedem mineralischen Füllstoff zur Verstärkung ist und daß sie die folgenden Bestandteile umfaßt:

(A) : eine Emulsion vom Typ Öl-in-Wasser auf der Basis von 100 Gewichtsteilen eines Öles oder eines $\alpha,\omega$-(Dihydroxy)-polydiorganosiloxan-Polymers (A1) und 1 bis 100 Gewichtsteilen eines Organosilicium-Vernetzungsmittels (A2), wobei die genannte Emulsion:

. stabilisiert ist durch mindestens ein oberflächenaktives Mittel (A3), ausgewählt unter den anionischen und den nicht ionischen oberflächenaktiven Mitteln und ihren Mischungen,
. eine Teilchengröße zwischen 0,1 µm (100 nm) und 100 µm (100000 nm) aufweist,
. einen Gehalt an Trockenextrakt von mindestens 60 Gew.-% besitzt;

(B) : pro 100 Gewichtsteile Öl oder Polymer (A1) 1 bis 100 Gewichtsteile einer wäßrigen Dispersion von mindestens einem organischen (Co)Polymer, das aufweist

. eine Teilchengröße zwischen 0,01 µm (10 nm) und 10 µm (10000 nm),
. einen Trockenextrakt zwischen 10 und 70 Gew.-%;

(C) : gegebenenfalls pro 100 Gewichtsteile Öl oder Polymer (A1) 0,01 bis 5 Gewichtsteile einer katalytischen, metallischen Härterverbindung;

wobei bei der genannten wäßrigen Dispersion, die einen Gehalt an Trockenextrakt von mindestens 60 Gew.-% besitzt, die Regulierung der Lichtdurchlässigkeit des zu bildenden Elastomerproduktes im Bereich der Herstellung der wäßrigen Dispersion erfolgt, indem man den oder die gewünschten Wert(e) : entweder die Teilchengröße des Latex-Polymers (B); oder den Brechungsindex des hauptsächlichen Polymers des Latex (B) ; die bei der chemischen Zusammensetzung des organischen (Co)Polymers eine Rolle spielen; oder die zwei vorstehend genannten Parameter, Größe und Brechungsindex, gleichzeitig einstellt.

2. Dispersion nach Anspruch 1, dadurch gekennzeichnet, daß das $\alpha,\omega$-(Dihydroxy)-polydiorganosiloxan-Polymer (A1) eine Viskosität von mindestens 50000 mPa.s bei 25 °C aufweisen soll und daß die organischen Reste dieses Siloxans monovalente Kohlenwasserstoffreste sind, die bis zu 6 Kohlenstoffatome enthalten, gegebenenfalls substituiert durch Gruppen Cyano oder Fluor.

3. Dispersion nach Anspruch 1 oder 2, dadurch gekennzeichnet, daß das Vernetzungsmittel (A2) ausgewählt wird unter:

. einem Organosiliconat,
. einer Harz-Mikroemulsion von Silsesquinoxan-Harz,
. einem reaktiven Siliconharz mit geringer Molekularmasse, das Gruppen Alkoxy und Acyloxy aufweist,
. einem Siliconharz mit hoher Molekularmasse, unlöslich in Toluol,
. einem hydroxylierten Siliconharz, das pro Molekül mindestens zwei unterschiedliche Struktureinheiten aufweist, ausgewählt unter denen der Formeln: $R_3SiO_{0,5}$(M), $R_2SiO$(D), $RSiO_{1,5}$(T) und $SiO_2$(Q), worin R hauptsächlich ein Rest Alkyl mit 1 bis 6 Kohlenstoffatomen, Vinyl und 3,3,3-Trifluor-propyl ist und einen gewichtsmäßigen Gehalt an Hydroxylgruppen zwischen 0,1 und 10 % besitzt,
. einem Silan der Formel: $R_aSiX_{4-a}$, worin R einen monovalenten organischen Rest darstellt, insbesondere Methyl oder Vinyl, a 1 oder 0 ist und X eine kondensierbare und/oder hydrolysierbare Gruppe bedeutet, vorzugsweise ausgewählt unter den Gruppen Alkoxy, Acyloxy, Ketiminoxy, Alkylamino, Amido und Alkenyloxy und ihren verschiedenen möglichen Mischungen.

4. Dispersion nach irgendeinem der Ansprüche 1 bis 3, dadurch gekennzeichnet, daß die wäßrige Dispersion (B) diejenige ist, die organische (Co)Polymere enthält, die ihrerseits stammen von:

· der (Co)Polymerisation von mindestens einem hauptsächlichen Monomer, ausgewählt unter Styrol (a), Butadien (b), den Acrylestern (c) und den Vinyl-nitrilen (d),
· wobei einige dieser hauptsächlichen Monomeren (a) bis (d), die mit bis zu 40 Gew.-% der Gesamtmenge der Monomeren von mindestens einem anderen Monomer oder einer ungesättigten Verbindung copolymerisiert werden können, gewählt aus der Gruppe, die gebildet wird durch:

(e) : die Vinylester von Carbonsäuren,
(f) : die ethylenisch ungesättigten Mono- und Dicarbonsäuren,
(g) : die Mono-Alkylester der vorstehend unter (f) genannten Dicarbonsäuren mit Alkanolen mit 1 bis 4 Kohlenstoffatomen und ihren N-substituierten Derivaten,
(h) : die Amide der ungesättigten Carbonsäuren,
(i) : die ethylenischen Monomeren, die eine Sulfonsäuregruppe umfassen und ihre Alkali- oder Ammoniumsalze,
(j) : die ethylenisch ungesättigten Monomeren, die eine sekundäre, tertiäre oder quaternäre Aminogruppe oder eine heterocyclische Gruppe umfassen, die Stickstoff enthält, ebenso wie die zwitterionischen Monomeren,
(k) : die Ester von (Meth)Acrylsäuren mit Alkandiolen, die vorzugsweise 2 bis 8 Kohlenstoffatome enthalten sowie die Monomeren, die zwei polymerisierbare Doppelbindungen umfassen,
(1): Glycidyl-methacrylat,
(m) : die Vinylsilane oder Acrylsilane,
(n) : ein funktionalisiertes Polyorganosiloxan, das mindestens eine ethylenisch ungesättigte Funktion trägt, die fähig ist, auf dem Radikalwege mit einem anderen ethylenisch ungesättigten Monomer zu reagieren.

5. Dispersion nach irgendeinem der Ansprüche 1 bis 4, dadurch gekennzeichnet, daß man bei dem Ziel, ein Elastomer mit regulierbarer Lichtdurchlässigkeit herzustellen, in einer Zone von mittleren bis hohen Werten einen Latex (B) verwendet, der aufweist:

. eine Teilchengröße zwischen 0,01 µm (10 nm) und 0,08 µm (80 nm), und
. einen Trockenextrakt zwischen 10 und 50 Gew.-%.

6. Dispersion nach Anspruch 5, dadurch gekennzeichnet, daß

. die wäßrige Dispersion oder der Latex (B) diejenige ist, die enthält:

- acrylische Homopolymere, erhalten ausgehend von einem Monomer (c), und
- Copolymere, teilweise oder vollständig erhalten entweder ausgehend von acrylischen Monomeren (c) oder ausgehend von mindestens einem Monomer (c) und mindestens einem anderen acrylischen Monomer, gewählt aus der Gruppe, die gebildet wird durch die Monomeren (f), verwendet als (Meth)Acrylsäuren, die Monomeren (h), verwendet als Acrylderivate und die Monomeren (k), und

. in dem Fall, wo die Copolymeren teilweise von acrylischen Monomeren (c) oder (c) + (f) und/oder (h) und/oder (k) abgeleitet sind, verwendet man eine Menge an acrylischen Monomeren zwischen 70 und 99 Gew.-% der Gesamtmenge der Monomeren.

**7.** Dispersion nach Anspruch 6, dadurch gekennzeichnet, daß die wäßrige Dispersion (B) diejenige ist, die acrylische organische (Co)Polymere mit einer Glasübergangstemperatur Tg zwischen +50 °C und +130 °C enthält.

**8.** Dispersion nach Anspruch 7, dadurch gekennzeichnet, daß die wäßrige Dispersion (B) diejenige ist, die acrylische organische (Co)Polymere mit einer Tg zwischen +50 °C und +130 °C enthält, bei denen der Brechungsindex $\bar{n}$ zwischen 1,34 und 1,50 liegt.

**9.** Wäßrige Dispersion nach irgendeinem der Ansprüche 1 bis 3, dadurch gekennzeichnet, daß man bei dem Ziel, ein Elastomer mit regulierbarer Lichtdurchlässigkeit herzustellen, in einer Zone von niedrigeren Werten als denen der Zone von mittleren bis hohen Werten, von denen in Anspruch 5 gesprochen wurde, einen Latex (B) verwendet, der:

· eine Teilchengröße zwischen einem genauen Wert von höher als 0,08 µm (80 nm) und 10 µm, und einen Trockenextrakt zwischen 30 Gew.-% und 70 Gew.-% aufweist, und
· wie oben in Anspruch 6 definierte acrylische (Co)Polymere enthält.

**10.** Wäßrige Dispersion nach Anspruch 9, dadurch gekennzeichnet, daß die wäßrige Dispersion (B) diejenige ist, die acrylische organische (Co)Polymere mit einer Glasübergangstemperatur Tg zwischen +50 °C und +130 °C enthält.

**11.** Wäßrige Dispersion nach Anspruch 10, dadurch gekennzeichnet, daß die wäßrige Dispersion (B) diejenige ist, die acrylische organische (Co)Polymere mit einer Tg zwischen +50 °C und +130 °C enthält, bei denen der Brechungsindex $\bar{n}$ zwischen 1,34 und 1,50 liegt.

**12.** Wäßrige Dispersion nach irgendeinem der Ansprüche 5 bis 8, dadurch gekennzeichnet, daß der Latex (B) eine Teilchengröße zwischen 0,02 µm (20 nm) und 0,06 µm (60 nm) aufweist.

**13.** Wäßrige Dispersion nach irgendeinem der Ansprüche 9 bis 11, dadurch gekennzeichnet, daß der Latex (B) eine Teilchengröße zwischen einem genauen Wert von höher als 0,08 µm (80 nm) und 2 µm aufweist.

**14.** Wäßrige Dispersion nach irgendeinem der Ansprüche 1 bis 13, dadurch gekennzeichnet, daß

. die Emulsion (A) einen Gehalt an Trockenextrakt von 80 Gew.-% bis 98 Gew.-% besitzt,
. die fertige wäßrige Dispersion einen Gehalt an Trockenextrakt von 80 Gew.-% bis 95 Gew.-% besitzt.

**15.** Wäßrige Dispersion nach irgendeinem der Ansprüche 1 bis 14, dadurch gekennzeichnet, daß die metallische Verbindung (C) ein Organozinnsalz ist, das in Form einer wäßrigen Emulsion vorliegt.

**16.** Verfahren zur Herstellung einer wäßrigen Emulsion wie in Anspruch 1 bis 15 definiert, dadurch gekennzeichnet, daß man bei Umgebungstemperatur zu der Emulsion (A) an erster Stelle die Dispersion (B), anschließend den metallischen Härterkatalysator (C), gegebenenfalls in Form einer wäßrigen Dispersion oder Emulsion, und gegebenenfalls den oder die fakultativen Zusatzstoff(e) gibt.

**17.** Verfahren nach Anspruch 16, dadurch gekennzeichnet, daß der pH der fertigen wäßrigen Dispersion durch Zusatz einer starken Mineralbase auf einen Wert von höher als 7 eingestellt wird.

**18.** Verwendung einer wäßrigen Dispersion, wie in irgendeinem der Ansprüche 1 bis 16 definiert, in der Bauindustrie zur Herstellung von lichtdurchlässigen Silicon-Elastomer-Produkten, bestehend aus Kitten für das Abdichten und Verkleben, Schutzüberzügen und Außenhäuten von Fassaden.

## Claims

1. Aqueous dispersion based on silicones and on organic (co)polymer(s) which crosslink, by elimination of water through drying under ambient conditions, into an elastomer with adjustable translucency which has high mechanical properties, characterized in that it is free of any reinforcing inorganic filler and in that it comprises the following constituents:

   (A): an oil-in-water emulsion based on 100 parts by weight of an oil or of an $\alpha,\omega$-(dihydroxy)polydiorganosiloxane polymer (A1) and on 1 to 100 parts by weight of an organosilicon crosslinking agent (A2), the said emulsion:

   - being stabilized by at least one surfactant (A3) chosen from anionic and nonionic surfactants and mixtures thereof,
   - having a particle size of between 0.1 µm (100 nm) and 100 µm (100,000 nm),
   - having a solids content of at least 60% by weight;

   (B): per 100 parts by weight of oil or polymer (A1), from 1 to 100 parts by weight of an aqueous dispersion of at least one organic (co)polymer having:

   - a particle size of between 0.01 µm (10 nm) and 10 µm (10,000 nm);
   - a solids content of between 10 and 70% by weight;

   (C): optionally, per 100 parts by weight of oil or polymer (A1), from 0.01 to 5 parts by weight of a catalytic metallic curing compound;

   the said aqueous dispersion having a solids content of at least 60% by weight;
   the translucency of the elastomeric product to be formed being adjusted, during the preparation of the aqueous dispersion, by adjusting to the desired value(s) : either the size of the polymer particles in the latex (B); or the refractive index of the polymer constituting the latex (B) by modifying the chemical composition of the organic (co) polymer; or the two above mentioned parameters, size and refractive index, at the same time.

2. Dispersion according to Claim 1, characterized in that the $\alpha,\omega$-(dihydroxy)polydiorganosiloxanes (A1) must have a viscosity of at least 50,000 mPa.s at 25°C and in that the organic radicals of these siloxanes are monovalent hydrocarbon-based radicals containing up to 6 carbon atoms, optionally substituted with cyano or fluoro groups.

3. Dispersion according to Claim 1 or 2, characterized in that the crosslinking agent (A2) is chosen from:

   - an organosiliconate;
   - a silsesquioxane resin microemulsion resin;
   - a reactive silicone resin of low molecular mass containing alkoxy and acyloxy groups;
   - a toluene-insoluble silicone resin of high molecular mass;
   - a hydroxysilicone resin containing, per molecule, at least 2 different units chosen from those of formulae: $R_3SiO_{0.5}$ (M), $R_2SiO$ (D), $RSiO_{1.5}$ (T) and $SiO_2$ (Q), R mainly being a $C_1$-$C_6$ alkyl, vinyl or 3,3,3-trifluoropropyl radical, and having a hydroxyl group weight content of between 0.1 and 10%;
   - a silane of formula: $R_aSiX_{4-a}$ in which R is a monovalent organic radical, in particular methyl or vinyl, a is 1 or 0, X is a condensable and/or hydrolyzable group preferably chosen from alkoxy, acyloxy, ketiminoxy, alkylamino, amido and alkenyloxy groups and the various possible mixtures thereof.

4. Dispersion according to any one of Claims 1 to 3, characterized in that the aqueous dispersion (B) is the one containing organic (co)polymers which are derived:

   - from the (co)polymerization of at least one main monomer chosen from styrene (a), butadiene (b), acrylic esters (c) and vinyl nitriles (d),
   - it being possible for some of these main monomers (a) to (d) to be copolymerized with up to 40% by weight, relative to the total weight of the monomers, of at least one other monomer or unsaturated compound chosen from the group formed by:

     (e) : vinyl esters of a carboxylic acid;

(f) : ethylenic unsaturated mono- and dicarboxylic acids;
(g) : monoalkyl esters of the dicarboxylic acids mentioned above in (f) with alkanols containing from 1 to 4 carbon atoms, and the N-substituted derivatives thereof;
(h) : unsaturated carboxylic acid amides;
(i) : ethylenic monomers containing a sulphonic acid group and its ammonium or alkali metal salts;
(j): ethylenically unsaturated monomers containing a secondary, tertiary or quaternary amino group or a heterocyclic group containing nitrogen, as well as zwitterionic monomers;
(k) : esters of (meth)acrylic acids with alkanediols preferably containing 2-8 carbon atoms, as well as monomers containing two polymerizable double bonds;
(l) : glycidyl methacrylate;
(m) : vinyl or acrylic silanes;
(n) : a functionalized polyorganosiloxane bearing at least one ethylenically unsaturated function which can react, via a radical route, with another ethylenically unsaturated monomer.

**5.** Dispersion according to any one of Claims 1 to 4, characterized in that, with the aim of producing an elastomer with translucency which is adjustable within a zone of medium to high values, a latex (B) is used having:

- a particle size of between 0.01 µm (10 nm) and 0.08 µm (80 nm), and
- a solids content of between 10 and 50% by weight.

**6.** Dispersion according to Claim 5, characterized in that:

. the aqueous dispersion or latex (B) is that containing:

  - acrylic homopolymers obtained from a monomer (c), and
  - copolymers obtained, partly or totally, either from acrylic monomers (c) or from at least one monomer (c) and at least another acrylic monomer taken from the group formed by the monomers (f) taken as (meth) acrylic acids, the monomers (h) taken as acrylic derivatives, and the monomers (k); and

. in the case of copolymers derived partly from acrylic monomers (c) or (c) + (f) and/or (h) and/or (k), an amount of acrylic monomers of between 70% and 99% by weight relative to the total weight of the monomers is used.

**7.** Dispersion according to Claim 6, characterized in that the aqueous dispersion (B) is that containing acrylic organic (co)polymers with a glass transition temperature Tg of between +50°C and +130°C.

**8.** Dispersion according to Claim 7, characterized in that the aqueous dispersion (B) is that containing acrylic organic (co)polymers with a Tg of between +50°C and +130°C, for which the refractive index $\bar{n}$ is between 1.34 and 1.50.

**9.** Aqueous dispersion according to any one of Claims 1 to 3, characterized in that, with the aim of producing an elastomer with translucency which is adjustable within a zone of values less than the zone of medium to high values mentioned earlier in Claim 5, a latex (B) is used:

- which has a particle size between a value just greater than 0.08 µm (80 nm) and 10 µm; and a solids content of between 30% and 70% by weight; and
- which contains the acrylic (co)polymers defined above in Claim 6.

**10.** Aqueous dispersion according to Claim 9, characterized in that the aqueous dispersion (B) is that containing acrylic organic (co)polymers with a glass transition temperature Tg of between +50°C and +130°C.

**11.** Aqueous dispersion according to Claim 10, characterized in that the aqueous dispersion (B) is that containing acrylic organic (co)polymers with a Tg of between +50°C and +130°C, for which the refractive index $\bar{n}$ is between 1.34 and 1.50.

**12.** Aqueous dispersion according to any one of Claims 5 to 8, characterized in that the latex B has a particle size of between 0.02 µm (20 nm) and 0.06 µm (60 nm).

**13.** Aqueous dispersion according to any one of Claims 9 to 11, characterized in that the latex B has a particle size between a value just greater than 0.08 µm (80 nm) and 2 µm.

**14.** Aqueous dispersion according to any one of Claims 1 to 13, characterized in that:

- . the emulsion (A) has a solids content of from 80 to 98% by weight;
- . the final aqueous dispersion has a solids content of from 80 to 95% by weight.

**15.** Aqueous dispersion according to any one of Claims 1 to 14, characterized in that the metallic compound (C) is an organotin salt in the form of an aqueous emulsion.

**16.** Process for the preparation of an aqueous dispersion as defined in Claims 1 to 15, characterized in that the dispersion (B) is first added to the emulsion (A) at room temperature, followed by the metallic curing catalyst (C) optionally in the form of an aqueous dispersion or emulsion, and the optional additive(s).

**17.** Process according to Claim 16, characterized in that the pH of the final aqueous dispersion is adjusted to a value of greater than 7 by adding a strong inorganic base.

**18.** Use of an aqueous dispersion as defined in any one of Claims 1 to 16, in the building industry in the preparation of translucent silicone elastomeric products consisting of sealing and weatherproofing mastics, protective coatings and skins for facades.